# EUROPEAN PATENT APPLICATION

(11) **EP 1 213 647 A1**
(43) Date of publication of application: **12.06.2002**
(21) Application number: 00204347.9
(22) Date of filing: 06.12.2000
(51) Int. Cl.: G06F 9/445

(54) **A software configuration system and the creation and use thereof**

(71) Applicant: Atos Origin Telco Services B.V., 9728 HD Groningen (NL)
(72) Inventor: Hottinga, Kees-Dirk, 9627 PA Hellum (NL)
(74) Representative: de Roquemaurel, Bruno

(57) **Abstract**

A software configuration system compiled on a first computer system, the configuration system comprising a predetermined link between at least two basic software products being compiled or stored on said first computer system, the link being activated by a remote access to the system and the link enabling a further use of a combined software application containing and/or invoking at least parts of said basic software product.

## Description

### FIELD OF THE INVENTION

The present invention relates to software application and development systems. More specifically, a software configuration system and the use thereof is disclosed.

### BACKGROUND

In the past, software, such as application software has been installed on and was executed on each individual computer, or on a mainframe computer. A user was able to get access to and make use of the software via the user interface of this individual computer, resp. via a terminal which was coupled to the mainframe computer. As a next step in the development of computing technology, the client-server approach has been introduced, where a user having its own computer system (a remote user), was given access to software applications residing on another computer system, a server. With the increasing complexity of software applications and the increased number of access ports to such software applications, this approach has seen the rise of a number of problems. For example, the application software on the server, in its use may need a multiple of other software applications which all need to be configured and linked without giving any extra burden to the remotely accessing user. Within such complex software configuration environment, the roll-out and addition of a new version of the application software or of the linked applications is complex, because the client software must always stay compatible with the server software.

Currently the transition from the client-server approach to the next step, web-enabled applications, is also made. This next step makes it possible for a user to get access from a remote computer system to various kinds of software through the access port of the web. The software to be utilised by the user resides on another computer system, a server, while both computer systems are connected to each other through a network, such as the internet. The only requirement is that the computer system of the user is equipped with generic software enabling the user to get access to the network, such as a browser. By for example selecting a specific internet web address, the user is able to utilise certain software, which is executed on the server.

The advantages of remote access are numerous. In principle this remote access makes it possible for a computer to be plugged into a network via a television set or a telephone, obtaining immediate access to all software available for the user, without a need to perform software installations, software downloads etc. There is however a need in the art to have a software configuration system that permits the use software applications via such remote access without creating an undue burden on the remotely accessing user or the system manager of the file server hosting the remotely accessed software applications.

### PROBLEM DEFINITION AND SUMMARY

In most cases the server containing the software applications that can be remotely accessed, can supply various software applications or environments to a number of users. Each user might make use of a different software application or environment. Therefore, for each software application or software environment and for each user a different set of basic software products is utilised.

The software that can be accessed by the user via a remote access such as the web server can consist of software applications, which are non-user specific, it can also consist of a software environment which is developed for the user. This user specific software environment is in most cases developed, making use of at least one software application. In general the software applications are built up using a number of modules or other software applications, in this document called basic software products, which together form or are being invoked by the software application. The basic software products can comprise standard or tailormade programs, user specific data, generic parameters or user specific parameters. The specific combination of software applications and/or basic software products together forms the software environment perceived as the user/development environment by the remotely accessing user.

A problem is that the relations between the basic software products, the software application and the server are complex and therefore prone to errors. For each software application or environment, the specific combination of basic software products needs to be defined. Especially in the case of a software environment which is built up utilising software applications, putting the right relations in place is complex, as each software environment consists of at least one application, which in turn consists of at least one basic software product. Each time a software environment is created or modified, the programmer has to define or redefine all relations, looking up details about required basic software products in the software manuals, which is time consuming. Also it is difficult to enable a programmer from another organisation to create software environments on the server from a remote site, because the programmer requires insight in all details of basic software products, to be able to define the correct relations. For safety reasons or for commercial reasons it might not be desirable to provide such information to other parties.

Another drawback is that, to verify that all relations are correct, extensive testing is a necessity, which requires additional man-hours and additional lead-time. Furthermore, the maintenance of a server which provides software environments and software applications is complex, as each time a new version of a basic software product, a new version of a software application or a new version of a software environment is installed, all relations have to be checked and updated manually.

The invention intends to overcome or at least to reduce the above problems. Also, the invention intends to reduce the number of errors occurring because of incorrectly defined relations between software applications and basic software products. Furthermore the invention intends to simplify the development of software environments and intends to simplify a creation of such software environment on a computer environment remote from the user. Also the inventions intends to simplify the maintenance of a server containing software environments, software applications and basic software products.

A software configuration system compiled on a first computer system is disclosed. The computer system can contain a first software environment. The configuration system comprises a predetermined link between at least two basic software products being compiled or stored on said first computer system, the link being activated by a remote access to the system and the link enabling a further use of a combined software application containing and/or invoking at least parts of said basic software product. A method of creating a software environment is also disclosed.

### DETAILED DESCRIPTION

For the purpose of teaching of the invention, a preferred embodiment of a software configuration system and of methods of the invention are described in the sequel. It will be apparent to the person skilled in the art that other alternative and equivalent embodiments of the invention can be conceived and reduced to practice without departing form the true spirit of the invention, the scope of the invention being limited only by the appended claims.

The preferred embodiment assumes a server that contains software application environments, and software basic products, and whereon the ORACLE products Developer/2000 and Web Forms for accessing the software basic products are installed, the publicly known contents and features of thees products being incorporated herein by reference. On such server, a software configuration system according to the invention is compiled. The software configuration system has the name EICA or E@ICA or Eica in the sequel. This configuration system is activated by a remote access to the server via a web browser. The remote user selects an access such as eica_envtab to the envisaged combined software application. The software configuration system contains a number of predetrminde links between basic software products as explained herebelow.

An eica-tool is activated through the eica_envtab access and this file makes a number of relations between the basic software products that are needed for the combined software application that is activated through _envtab. A user after making access runs an eica-tool and that tool reads the files detailed herebelow. In these files, the information about the location and version of the basic software products is contained. This information is read out by the eica-tool referred to hereabove and is used to configure the environment for the user. The eica-tool has a number of rules contained in it that help to configure the environment for the user.

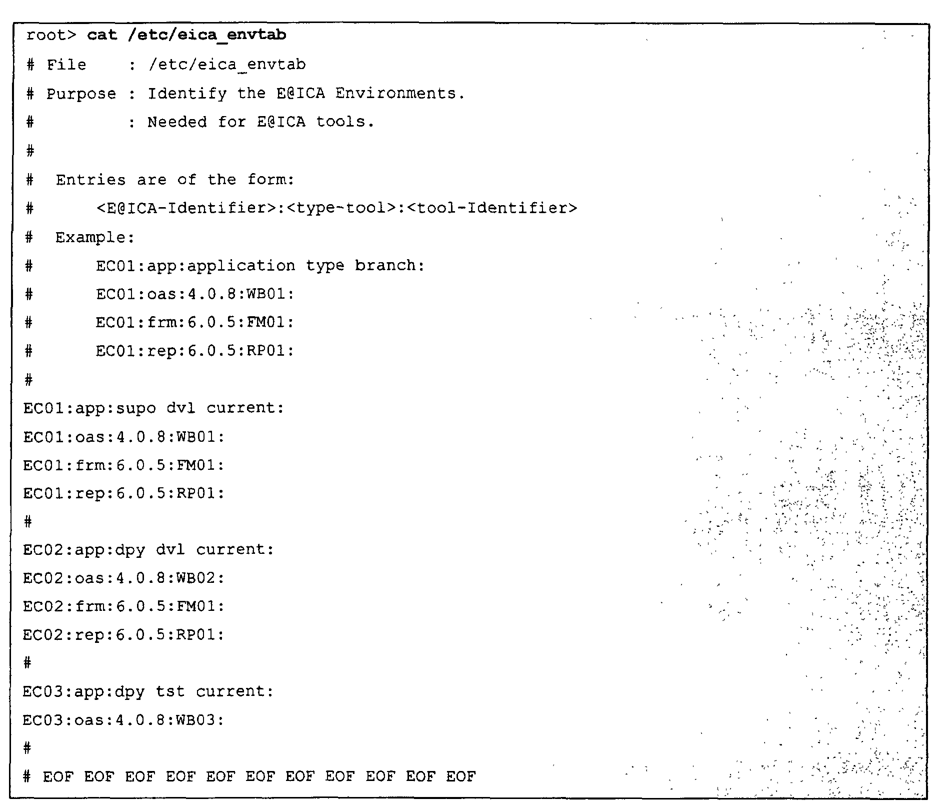

EC01 and EC02 and EC03 are different keys (environments) that are activated through the _envtab access. The choice between these different keys is done through the eica-tool and can be determined by the user. The choice can also be predetermined through the chosen access. It can be seen that EC01 and EC02 invoke the same forms and reports (basic software products) but each of the environments has its own Oracle Application Server. EC03 has no Forms and no Reports. These forms and reports and the web oracle application server (WB01), as shown herebelow, are the basic software products that are linked to the software application that is remotely accessed via _envtab.

The different fields are separated by the ':'.

In the 2^{e} field it is explained what kind of information is contained herein :
1. app: Application information
   3^{e} field : Which xsdmi-product is linked to EC01.
2. oas: (Web) Oracle Application Server informatie
   3^{e} field: Version of this product.
   4^{e} field: Internal key that is used in /etc/eica oastab.
3. frm: Forms (Developer/2000) information
   3^{e} field: Version of this product.
   4^{e} field: Internal key that is used in /etc/eica frmtab.
4. rep: Report (Developer/2000) information
   3^{e} field: Version of this product.
   4^{e} field: Internal key that is used in /etc/eica reptab.

The WB01 and WB02 keys are further linked to different web oracle application servers.

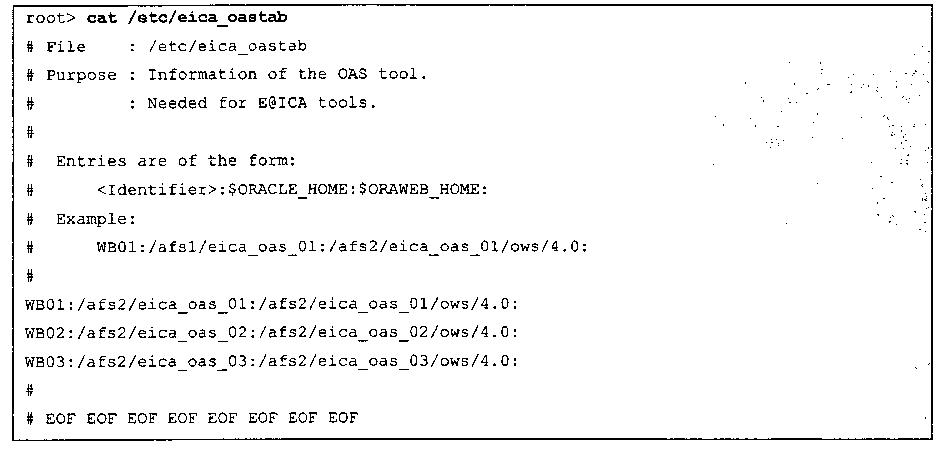

As stated above, the 1^{e} field is the internal key that is used in /*etc*/*eica_envtab.*

The Forms (Developer/2000) are invoked through the following link.

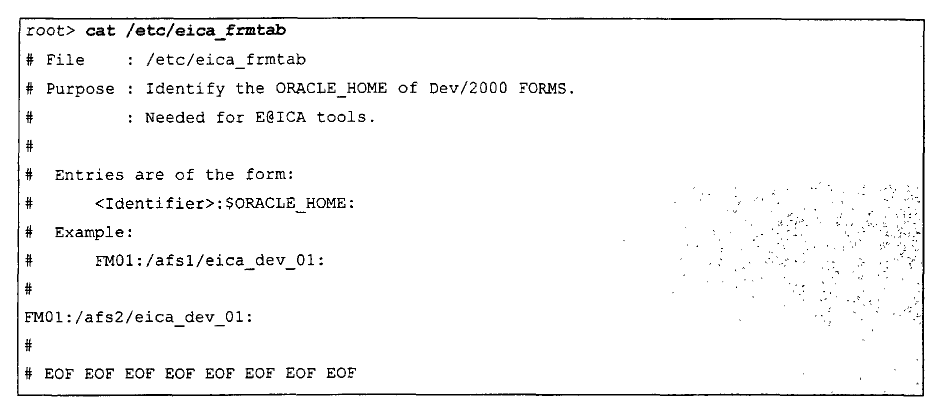

The 1^{e} field is the internal key that is used in /*etc*/*eica*_*envtab.*

A next file gives information about Reports (Developer/2000).

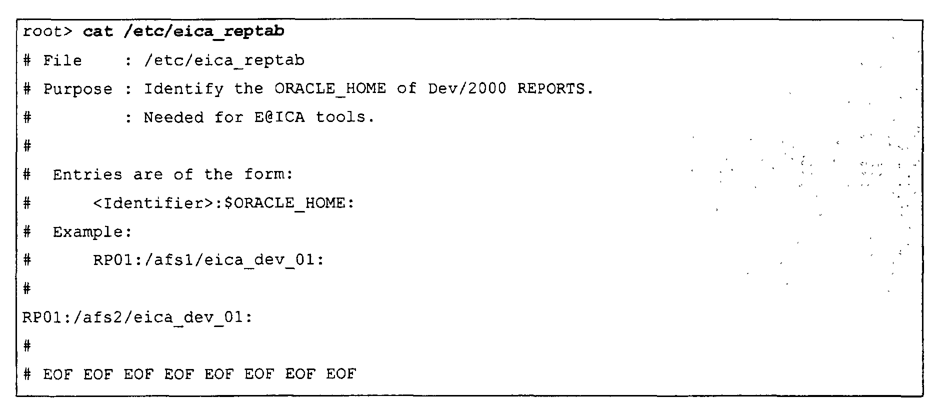

The 1^{e} field is the internal key that is used in /*etc*/*eica_envtab.*

There is 1 REPORTS-basic software product : RP01.

## Claims

1. A software configuration system compiled on a first computer system, the configuration system comprising a predetermined link between at least two basic software products being compiled or stored on said first computer system, the link being activated by a remote access to the system and the link enabling a further use of a combined software application containing and/or invoking at least parts of said basic software products.

2. The software configuration system as recited in claim 1, wherein each basic software product is selected from the group of software applications including a database application, a forms application, a reports application, a web browser, and an Independent Software Vendor application.

3. The software configuration system as recited in claim 1, wherein said remote access is activated from a second computer system being connnectable to said first computer system.

4. The software configuration system as recited in claim 1, wherein said further use comprises using, developing or amending said combined software application.

5. The software configuration system as recited in claim 1 being compiled as a computer program loadable into a computer so that the computer programmed in this way is capable of running the software system of any of claims 1-4.

6. A computer program product, comprising a computer readable medium on which the software configuration system of any of the preceding claims is recorded, such that a computer is capable of running a software environment after reading the recorded computer program product.

7. A method for creating a software environment on a first computer system, the method comprising:
providing at least two basic software product;
defining a functionality of said software environment;
selecting at least one of said said basic software products supporting said functionality;
creating a configuration software system having at least one program file containing data defining at least one relation between at least one of said basic software products, and said software environment;
linking said configuration software system and said at least one of said basic software products for creating said software environment, said configuration software system determining the linking.

8. The method of claim 7, wherein said software environment is created from a second computer system being connectable to said first computer system.
